# EUROPÄISCHE PATENTSCHRIFT

(11) **EP 1 162 090 B1**
(45) Veröffentlichungstag und Bekanntmachung des Hinweises auf die Patenterteilung: **08.03.2006**
(21) Anmeldenummer: 01112714.9
(22) Anmeldetag: 25.05.2001
(51) Int. Cl.: B60D 1/02, B60D 1/26

(54) **Kupplungsvorrichtung und Zugfahrzeug mit Kupplungsvorrichtung**
Coupling device and towing vehicle with coupling device
Dispositif d'attelage et un véhicule tracteur avec dispositif d'attelage

(30) Priorität: 07.06.2000 DE 10028303
(43) Veröffentlichungstag der Anmeldung: 12.12.2001
(73) Patentinhaber: ROCKINGER Spezialfabrik für Anhängerkupplungen GmbH & Co., D-80935 München (DE)
(72) Erfinder: Szczepanek, Udo, 82223 Eichenau (DE)
(74) Vertreter: Herzog, Markus

(56) Entgegenhaltungen:
- EP-A- 0 618 093
- EP-A- 0 675 012
- DE-A- 4 426 412
- FR-A- 2 667 545

## Beschreibung

Die Erfindung betrifft eine Kupplungsvorrichtung an einem Zugfahrzeug, umfassend eine Kupplungseinheit zum mechanischen Verbinden eines Nachlauffahrzeugs mit dem Zugfahrzeug, wobei die Kupplungseinheit ein Kraftgerät umfasst, mittels dessen sie aus einer geschlossenen Stellung in eine geöffnete Stellung überführbar ist, und eine Druckfluid-Zufuhrleitung, deren eines Ende an das Kraftgerät angeschlossen ist, um diesem zur Betätigung der Kupplungseinheit Druckfluid von einer am Zugfahrzeug angeordneten Druckfluidquelle zuzuführen.

Eine derartige Kupplungsvorrichtung ist beispielsweise aus der EP 0 941 874 A1 bekannt. Bei dieser Kupplungsvorrichtung werden zum Abkuppeln des Nachlauffahrzeugs vom Fahrer des Zugfahrzeugs oder einer anderen Bedienungsperson zunächst die zum Nachlauffahrzeug führenden Versorgungsleitungen für Druckfluid (Vorrats- und Steuerleitung) und elektrischen Strom (Beleuchtung, Blinksignale, ABS, usw.) abgekuppelt. Dann wird die Druckfluid-Zufuhrleitung des Kraftgeräts an eine am Zugfahrzeug vorgesehene Versorgungsstelle angeschlossen, an der im normalen Fahrbetrieb von Zug- und Nachlauffahrzeug die Druckfluid-Versorgungsleitung des Nachlauffahrzeugs angeschlossen ist. Somit kann dem Kraftgerät zur Betätigung der Kupplungseinheit Druckfluid von der am Zugfahrzeug angeordneten Druckfluidquelle zugeführt werden. Nach Überführen der Kupplungseinheit in ihre geöffnete Stellung kann das Nachlauffahrzeug vom Zugfahrzeug abgekoppelt werden. Das Zugfahrzeug kann nun alleine wegfahren, um an einer anderen Stelle ein anderes Nachlauffahrzeug anzukuppeln.

Vergisst der Fahrer jedoch, zuvor die Druckfluid-Zufuhrleitung wieder von der Versorgungsstelle für die Druckfluid-Versorgungsleitung des Nachlauffahrzeugs abzuziehen, so ist während der Transferfahrt zum nächsten Nachlauffahrzeug ein permanenter Nebenverbraucher mit der Druckfluidquelle verbunden, der nicht den Sicherheitsvorschriften entsprechend abgesichert ist, nämlich das Kraftgerät der Kupplungseinheit. Dies ist für die Verkehrssicherheit insbesondere deshalb problematisch, weil die Druckfluidquelle üblicherweise auch das Bremssystem des Zugfahrzeugs mit Druckfluid versorgt, und die Transferfahrt nicht notwendigerweise auf den gleichen Güterhof beschränkt zu sein braucht, sondern auch über öffentliche Straßen führen kann.

Demgegenüber ist es Aufgabe der vorliegenden Erfindung, eine Kupplungsvorrichtung der eingangs genannten Art anzugeben, welche eine erhöhte Sicherheit gegen unbeabsichtigten Druckfluidverlust bietet.

Diese Aufgabe wird erfindungsgemäß durch eine Kupplungsvorrichtung der gattungsgemäßen Art gelöst, bei welcher das andere Ende der Druckfluid-Zufuhrleitung ständig an die Druckfluidquelle angeschlossen ist und bei welcher die Druckfluid-Zufuhrleitung wenigstens ein Sperrventil aufweist, das unter dem Einfluss eines Steuermediums zwischen einer Durchlassstellung und einer Sperrstellung verstellbar ist, wobei ein Ende einer Steuermedium-Zufuhrleitung an das wenigstens eine Sperrventil angeschlossen ist, während an dem freien Ende dieser Steuermedium-Zufuhrleitung ein Verbindungselement vorgesehen ist, mittels dessen die Steuermedium-Zufuhrleitung mit einer Steuermedium-Versorgungsstelle des Zugfahrzeugs verbindbar ist. Erfindungsgemäß ist also die Druckfluid-Zufuhrleitung, die von der Druckfluidquelle zum Kraftgerät der Kupplungseinheit führt, fest am Zugfahrzeug eingebaut. Ferner braucht die Bedienungsperson zur Herstellung einer Druckfluidverbindung zwischen der Druckfluidquelle und dem Kraftgerät nicht unmittelbar an der Druckfluid-Zufuhrleitung zu manipulieren, sondern vielmehr über das wenigstens eine Sperrventil lediglich mittelbar. Somit ist bei der erfindungsgemäßen Kupplungsvorrichtung im Gegensatz zu der gattungsgemäßen Kupplungsvorrichtung, bei der hauptsächlich die Gefahr eines unsachgemäßen Anschlusses der Druckfluid-Zufuhrleitung an die Druckfluid-Versorgungsstelle des Zugfahrzeugs bestand, die Fehlerquelle "Mensch" ausgeschlossen.

Als Steuermedium kann beispielsweise elektrischer Strom verwendet werden. Hierzu kann die Steuermedium-Zufuhrleitung als elektrische Leitung ausgebildet sein, die an ihrem freien Ende zur Verbindung mit einem Elektroanschluss des Zugfahrzeugs beispielsweise mit einem Stecker versehen sein kann. Das wenigstens eine Sperrventil kann in diesem Fall vorzugsweise als elektromagnetisch betätigbares Ventil, beispielsweise als elektromagnetisch betätigbares Wegeventil, ausgebildet sein, das bei Stromzufuhr in die Durchlassstellung übergeführt wird, und nach Abschalten des Stroms federvorgespannt in die Sperrstellung zurückfällt.

Zur Verminderung der Fehleranfälligkeit der erfindungsgemäßen Kupplungsvorrichtung können in der Druckfluid-Zufuhrleitung wenigstens zwei in Reihe angeordnete Sperrventile vorgesehen sein. Sollte eines dieser Sperrventile in der Durchlassstellung blockieren, d.h. auch nach Beendigung der Zufuhr des Steuermediums in der Durchlassstellung verharren, so kann die gewünschte Unterbrechung der Verbindung des Kraftgeräts mit der Druckfluidquelle des Zugfahrzeugs durch das zweite Sperrventil bzw. die weiteren Sperrventile sichergestellt werden. Die Gefahr eines in einem Wartungsintervall zwischen zwei aufeinanderfolgenden Wartungen auftretenden und unbemerkt bleibenden Defekts kann hierdurch reduziert werden. Ein Blockieren eines der Sperrventile in der Sperrstellung wird von der Bedienungsperson sofort bemerkt, da in diesem Fall die Kupplungseinheit nicht mittels des Kraftgeräts geöffnet werden kann.

Um auch dem Fall vorbeugen zu können, dass die Bedienungsperson nach dem Abkoppeln des Nachlauffahrzeugs aus Nachlässigkeit oder Unaufmerksamkeit die Steuermedium-Zufuhrleitung mit der Steuermedium-Versorgungsstelle des Zugfahrzeugs verbunden läßt, wird vorgeschlagen, dass der Steuermedium-Zufuhrteitung eine Zeitglied-Vorrichtung zugeordnet ist, welche die Zufuhr von Steuermedium zu dem Sperrventil unterbricht, sobald seit der Herstellung der Verbindung des Verbindungselements mit der Steuermedium-Versorgungsstelle eine vorbestimmte Zeit vergangen ist.

Die Kupplungseinheit kann in an sich bekannter Weise in ihre geschlossene Stellung federvorgespannt sein. In diesem Fall fällt das Kupplungselement der Kupplungseinheit, beispielsweise der Kupplungsbolzen einer Anhängerkupplung für deichselgeführte Nachlauffahrzeuge oder der Sperrriegel einer Sattelkupplung, beim Einführen des Gegenkupplungselements des Nachlauffahrzeugs, beispielsweise der an einem freien Ende der Deichsel angeordneten Zugöse oder des Königszapfens eines Sattelaufliegers, in Folge der Federvorspannung automatisch in seine Kupplungsstellung.

Zusätzlich kann das Kraftgerät dazu genutzt werden, auch die Überführung der Kupplungseinheit in ihre geschlossene Stellung zu unterstützen. Auch dies ist an sich aus dem Stand der Technik bekannt. Erfindungsgemäß kann diese Unterstützung des Schließens der Kupplungseinheit dadurch realisiert werden, dass dem Kraftgerät ein Druckfluidspeicher zugeordnet ist, dem bei der Betätigung der Kupplungseinheit im Sinne deren Überführung in die geöffnete Stellung über eine Ladevorrichtung Druckfluid zugeführt wird, wobei die Ladevorrichtung das im Druckfluidspeicher gespeicherte Druckfluid bei einer Betätigung der Kupplungseinheit im Sinne deren Überführung in die geschlossene Stellung freigibt und dem Kraftgerät zuführt.

Dabei kann die Ladevorrichtung eine von der Druckfluid-Zufuhrleitung abgezweigte Ladeleitung umfassen, welche über ein Rückschlagventil zu dem Druckfluidspeicher führt, ferner eine von dem Druckfluidspeicher zu dem Kraftgerät führende Druckfluid-Abgabeleitung umfassen, und schließlich noch ein in der Druckfluid-Abgabeleitung angeordnetes Schaltventil, welches in einer ersten Schaltstellung den Druckfluidspeicher mit dem Kraftgerät im Sinne einer Überführung der Kupplungseinheit in deren geschlossene Stellung verbindet und diese Verbindung in einer zweiten Stellung unterbricht.

Das Schaltventil ist dabei bevorzugt ein Druckfluid-betätigtes Schaltventil, wobei eine Steuerleitung von der Druckfluid-Zufuhrleitung zu dem Schaltventil führt und über diese Steuerleitung an dem Schaltventil anstehendes Druckfluid dieses in seine zweite Schaltstellung überführt, und wobei ferner das Schaltventil in seine erste Schaltstellung federvorgespannt ist.

Um die Bedienungsperson über den Füllzustand des Druckfluidspeichers informieren zu können, kann dieser mit einer Druckanzeigevorrichtung, beispielsweise einem Druckanzeigestift oder einem Manometer, versehen sein.

In Weiterbildung der Erfindung kann vorgesehen sein, dass die Druckfluid-Zufuhrleitung direkt an die Druckfluidquelle angeschlossen ist. Unter Ausnutzung der bei modernen Zugfahrzeugen vorhandenen Anschlussmöglichkeiten ist es jedoch auch denkbar, dass die Druckfluid-Zufuhrleitung an einem Nebenverbraucheranschluss eines von der Druckfluidquelle versorgten Druckfluid-Verteilersystems des Zugfahrzeugs angeschlossen ist, vorzugsweise dem Nebenverbraucheranschluss eines Vierkreis-Schutzventils eines Druckluftsystems des Zugfahrzeugs.

In Weiterbildung der Erfindung wird vorgeschlagen, an dem Zugfahrzeug eine Parkposition für das Verbindungselement der Steuermedium-Zufuhrleitung vorzusehen. Dies stellt sicher, dass die Steuermedium-Zufuhrleitung und ihr Verbindungselement während der Fahrt, während der die Steuermedium-Zufuhrleitung ja nicht mit der Steuermedium-Versorgungsstelle des Zugfahrzeugs verbunden sein sollte bzw. darf, sich nicht in unkontrollierter Weise bewegt, insbesondere nicht gegen das Zugfahrzeug oder das Nachlauffahrzeug schlägt und dabei schlimmstenfalls beschädigt wird.

Zur Erleichterung der Arbeit des Bedienungspersonals und auch, um die Gefahr einer Nachlässigkeit oder eines Versehens des Bedienungspersonals zu vermindern, wird vorgeschlagen, dass eine Signaleinrichtung vorgesehen ist, welche anzeigt, ob das Verbindungselement mit der Steuermedium-Versorgungsstelle verbunden ist, oder/und, ob sich das Verbindungselement in der Parkposition befindet. Die Signalvorrichtung kann dabei optische oder/und akustische oder/und andere geeignete Signale abgeben.

Nachzutragen ist noch, dass dann, wenn im Zusammenhang mit der vorliegenden Erfindung von einem Druckfluid die Rede ist, vorzugsweise ein Druckgas, insbesondere Druckluft, gemeint ist.

Zur Erhöhung der Sicherheit gegen eine Fehlbedienung der erfindungsgemäßen Kupplungsvorrichtung kann der Steuermedium-Zufuhrleitung ein von Hand betätigbarer Schalter zugeordnet sein. Mittels dieses Schalters, der beispielsweise als die Steuermedium-Zufuhrleitung normalerweise öffnender und durch Handbetätigung schließbarer Taster ausgebildet sein kann, kann sichergestellt werden, dass zur Überführung des wenigstens einen Sperrventils in seine Durchlassstellung zusätzlich ein kontrolliertes und bewusstes Handeln der Bedienungsperson erforderlich ist, nämlich durch Betätigung des Schalters.

Der handbetätigbare Schalter bzw. Taster kann zusätzlich mittels einer Bypass-Leitung überbrückt sein, in welcher ein druckfluid-betätigbarer Schalter angeordnet ist. Wird die Steuermedium-Zufuhrleitung durch Betätigung des handbetätigbaren Schalters geschlossen und somit das wenigstens eine Sperrventil in seine Durchlassstellung übergeführt, so kann hierdurch auch dem druckfluid-betätigbaren Schalter über eine Druckfluid-Zweigleitung Druckfluid zugeführt werden, so dass dieser in seine geschlossene Stellung übergeführt und in dieser gehalten wird. In diesem Zustand ist der handbetätigbare Schalter mittels der Bypass-Leitung überbrückt und kann daher losgelassen werden, ohne dass damit die Gefahr einer ungewollten Rückführung des wenigstens einen Sperrventils in dessen Sperrstellung einherginge.

Die Erfindung betrifft ferner ein mit einer erfindungsgemäßen Kupplungsvorrichtung ausgestattetes Zugfahrzeug.

Die Erfindung wird im Folgenden an einem Ausführungsbeispiel anhand der beigefügten Zeichnungen näher erläutert werden. Es stellt dar:
- Fig. 1: Ein Schaltschema der erfindungsgemäßen Kupplungsvorrichtung;
- Fig. 2: eine Seitenansicht einer mit einem Kraftgerät ausgestatteten Anhängerkupplung für deichselgeführte Nachlauffahrzeuge;
- Fig. 3: eine schematische Ansicht einer am Zugfahrzeug anzubringenden Montageeinheit;
- Fig. 4: ein Schaltschema einer Erweiterung der erfindungsgemäßen Kupplungsvorrichtung zur Ermöglichung einer Unterstützung der Schließbewegung der Kupplungseinheit; und
- Fig. 5: ein Schaltschema ähnlich Fig. 1 einer abgewandelten Ausführungsform einer erfindungsgemäßen Kupplungsvorrichtung.

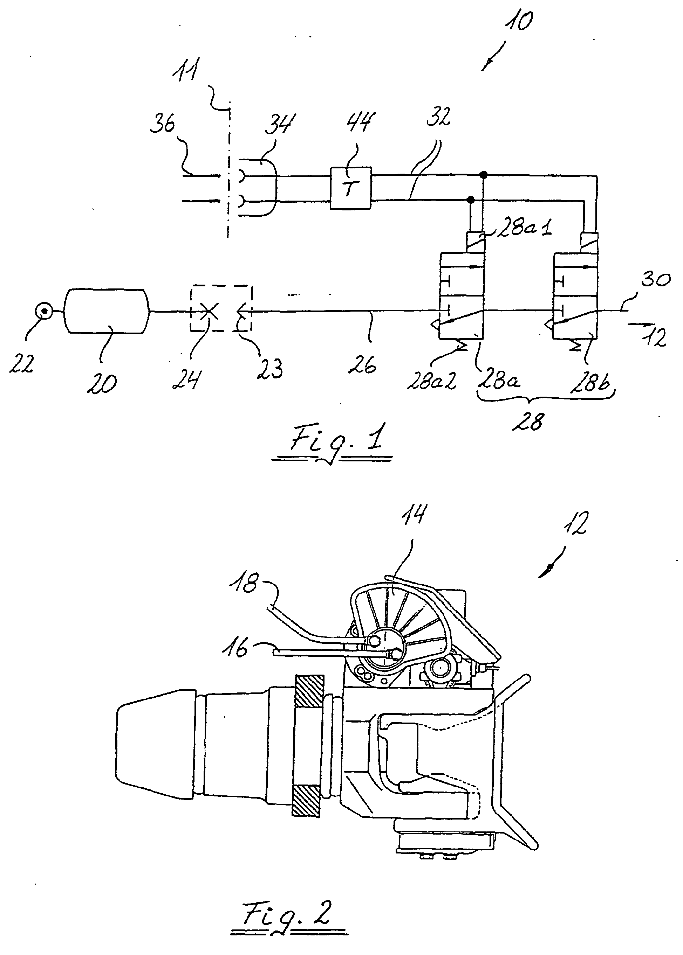

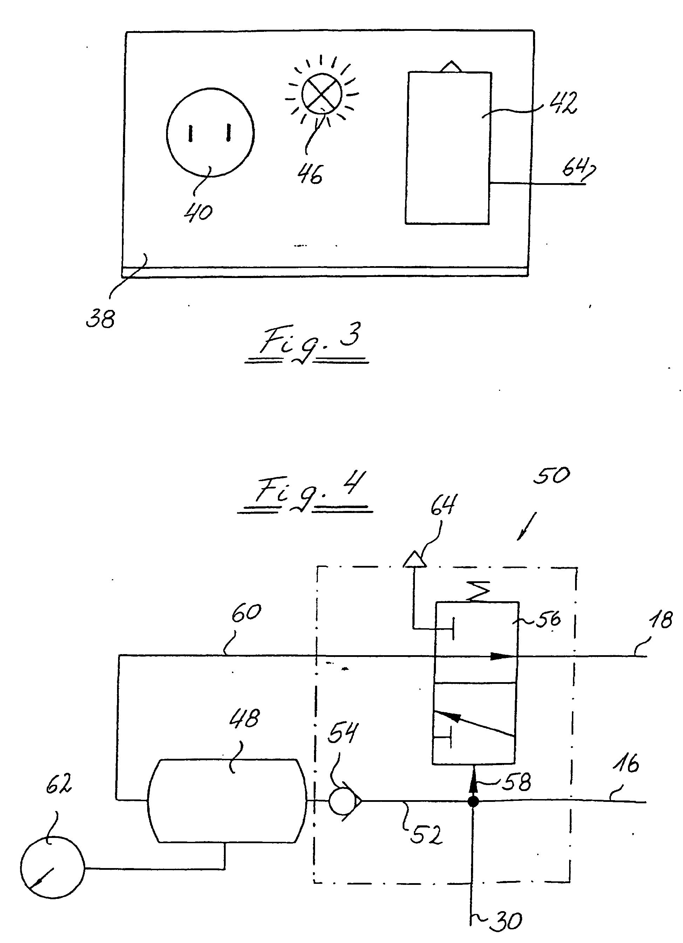

In den Fig. 1 bis 3 ist eine allgemein mit 10 bezeichnete, erfindungsgemäße Kupplungsvorrichtung dargestellt. Sie umfasst eine Kupplungseinheit 12 (s. Fig. 2), die in dem dargestellten Ausführungsbeispiel als Anhängerkupplung für deichselgeführte Nachlauffahrzeuge ausgebildet ist. Zur Ermöglichung einer Fernbetätigung der Kupplungseinheit 12 ist an dieser ein Kraftgerät 14 in Form eines pneumatisch betätigbaren Schwenkzylinders angebracht. Dieser mit dem Kupplungsbolzen der Kupplungseinheit 14 verbundene Schwenkzylinder unterteilt ein Arbeitsvolumen des Kraftgeräts 14 in zwei Arbeitskammern. An jede der Arbeitskammern ist eine Druckluftleitung 16 bzw. 18 angeschlossen. Wird dem Kraftgerät 14 über die Druckluftleitung 16 Druckluft zugeführt, so wird auf den Kupplungsbolzen der Kupplungseinheit 12 eine Kraft im Sinne dessen Überführung aus der geschlossenen Stellung in dessen geöffnete Stellung ausgeübt.

Der Aufbau derartiger mit einem Kraftgerät 14 versehener Kupplungseinheiten 12 ist im Stand der Technik sowohl von Anhängerkupplungen (s. Fig. 2) als auch von (nicht dargestellten) Sattelkupplungen her an sich bekannt und soll daher hier nicht näher erläutert werden.

Die Versorgung der Druckluftleitung 16 kann beispielsweise mittels der in Fig. 1 dargestellten Schaltung erfolgen:

Ein Druckluft-Vorratsbehälter 20 des Bremssystems des Zugfahrzeugs 11 wird über eine Pumpe 22 mit Druckluft gefüllt. An diesem Vorratsbehälter 20 kann entweder direkt oder, wie in Fig. 1 dargestellt, über einen Nebenverbraucheranschluss 23 des Vierkreis-Schutzventils 24 des Druckluftsystems des Zugfahrzeugs 11 eine Druckluft-Zufuhrleitung 26 angeschlossen sein, in der zwei Sperrventile 28a und 28b (zusammen nachfolgend als Sperrventilanordnung 28 bezeichnet) angeordnet sind. In einer Grundvariante der Kupplungsvorrichtung 10 ist der Druckluft-Ausgang 30 der Sperrventilanordnung 28 mit der Druckluft-Zufuhrleitung 16 der Kupplungseinheit 12 verbunden.

Die beiden Sperrventile 28a und 28b weisen identischen Aufbau auf. Daher soll nachfolgend nur auf das Sperrventil 28a näher eingegangen werden. Das Sperrventil 28a ist als 3/2-Wegeventil ausgebildet, das unter dem Einfluss einer elektromagnetischen Stellvorrichtung 28a 1 in eine Durchlassstellung übergeführt werden kann und nach Entregen des Elektromagneten 28a1 unter dem Einfluss der Vorspannung durch eine Feder 28a2 in die in Fig. 1 dargestellte Sperrstellung zurückfällt. Zur Erregung des Elektromagneten 28a1 ist das Sperrvenitl 28a über eine elektrische Steuerleitung 32 mit einem Anschlusselement 34 verbunden, das mit einem am Zugfahrzeug 11 vorgesehenen Gegenanschlusselement 36 gekoppelt werden kann. Das Sperrventil 28b wird über die gleiche Steuerleitung 32 mit elektrischem Strom versorgt wie das bei Ventil 28a.

Wird nun zum Abkuppeln eines (nicht dargestellten) Nachlauffahrzeugs das Anschlusselement 34 von einer an einem Montagewinkel 38 (s. Fig. 3) des Zugfahrzeugs vorgesehenen Parkposition 40 abgenommen, und mit dem Gegenanschlusselement 36 zusammengeführt, so wird die Sperrventilanordnung 28 in ihre Durchlassstellung übergeführt, so dass dem Kraftgerät 14 über die Druckluft-Zufuhrleitung 26/16 Druckluft zugeführt wird, und somit die Kupplungseinheit 12 in ihre geöffnete Stellung übergeführt wird. Die aus der zweiten Arbeitskammer verdrängte Luft kann über die Abluftleitung 18 zu einem Schutzgehäuse 42 mit Filtereinsatz geleitet werden und von dort ins Freie (Atmosphäre) gelangen.

Nachdem der Kupplungsbolzen der Kupplungseinheit 12 nach deren Öffnen üblicherweise mechanisch in der geöffneten Stellung gehalten wird, kann nunmehr das Anschlusselement 34 wieder zu der Parkposition 40 zurückgeführt werden. Um die Bedienungsperson hieran zu erinnern, ist an dem Montagewinkel 38 eine Signallampe 46 vorgesehen, welche beispielsweise rot blinkt, solange sich das Anschlusselement 34 nicht in der Parkposition 40 befindet.

Sollte die Bedienungsperson das Rückführen des Anschlusselements 34 in die Parkposition 40 trotz der Signallampe 46 vergessen, so wird die Sperrventilanordnung 28 dann, wenn seit dem Zeitpunkt der Verbindung des Anschlusselements 34 mit dem Gegenanschlusselement 36 eine vorbestimmte Zeitdauer T, beispielsweise 10 Minuten, verstrichen ist, mit Hilfe eines Zeitschalters 44 stromlos geschaltet. Daraufhin fallen die beiden Sperrventile 28a und 28b unter dem Einfluss der Federvorspannung in die in Fig. 1 dargestellte Sperrstellung zurück. Hierdurch wird der Druckluftvorrat 20 des Zugfahrzeugs abgesichert. Bei einer Leckage in der Fernbetätigung wird der Druckluftvorrat des Zugfahrzeugs nicht entleert, so dass die Bremsfunktion des Zugfahrzeugs, für die der Druckluftspeicher 20 hauptsächlich bestimmt ist, nicht gefährdet ist.

Der Vorteil der vorstehend erläuterten Kupplungsvorrichtung 10 liegt hauptsächlich in ihrer Betriebssicherheit. Zum einen kann die Kupplungseinheit 12 nur bei stehendem Zug bedient werden. Und zum anderen sind zur Betätigung des Kraftgeräts 14 der Kupplungseinheit 12 keine unmittelbar am Druckluftsystem durchzuführenden Manipulationen erforderlich. Vielmehr erfolgen die Eingriffe mittelbar über die Sperrventilanordnung 28. Darüber hinaus ist die erfindungsgemäße Kupplungsvorrichtung 10 aus wenigen einfachen, auf dem Markt serienmäßig erhältlichen Standardkomponenten zusammengesetzt und kann daher kostengünstig bereitgestellt werden.

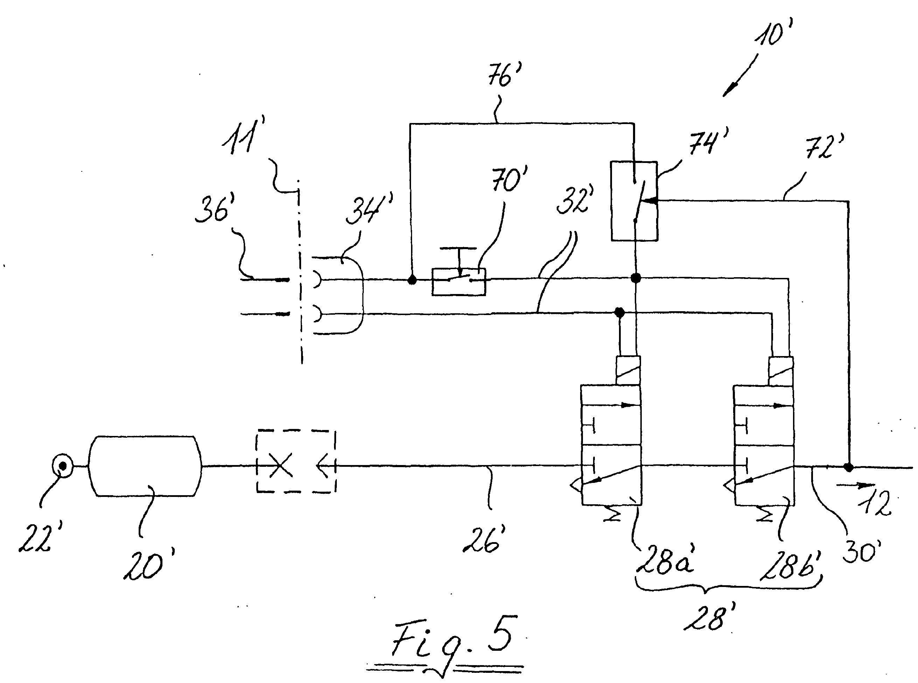

Mit Bezug auf Fig. 4 soll im Folgenden nun noch eine Variante der Kupplungsvorrichtung 10 erläutert werden, die es ermöglicht, das Kraftgerät 14 nicht nur zur Betätigung der Kupplungseinheit 12 im Sinne deren Öffnung, sondern auch im Sinne deren Schließens einzusetzen.

Hierzu ist dem Kraftgerät 14 ein Druckluftspeicher 48 zugeordnet, der dann, wenn dem Kraftgerät 14 über die Druckluft-Zufuhrleitung 26/16 Druckluft zugeführt wird, über eine Ladevorrichtung 50 mit Druckluft befüllt wird. Die Ladevorrichtung 50 umfasst eine von der Druckluft-Zufuhrleitung 26/16 abgezweigte Ladeleitung 52, die über ein Rückschlagventil 54 zu dem Druckspeicher 48 führt. Der Druckspeicher 48 steht ferner über eine Abgabeleitung 60 mit der Druckluftleitung 18 des Kraftgeräts 14 in Verbindung. Schließlich ist in dieser Abgabeleitung 60 ein Schaltventil 56 der Ladevorrichtung 50 angeordnet.

Das Schaltventil 56 ist in dem dargestellten Ausführungsbeispiel als 3/2-Wegeventil ausgebildet und kann unter dem Einfluss von Druckluft, die ihm über eine von der Druckluft-Zufuhrleitung 26/16 abgezweigte Steuerleitung 58 zugeführt wird, in eine Sperrstellung übergeführt werden, in welcher zum einen die Verbindung des Druckspeichers 48 mit dem Kraftgerät 14 über die Abgabeleitung 60 unterbrochen ist, und zum anderen die Druckluftleitung 18 des Kraftgeräts 14 mit der zum Schutzgehäuse 42 führenden Leitung 64 verbunden ist. Fällt der Luftdruck in der Zufuhrleitung 26/16 ab, beispielsweise in Folge der Überführung der Sperrventilanordnung 28 in ihre Sperrstellung, so fällt das Schaltventil 56 unter Federvorspannung in seine Durchlassstellung zurück, in welcher die im Druckluftspeicher 48 gespeicherte Druckluft über die Abgabeleitung 60 und die Druckluftleitung 18 dem Kraftgerät 14 zugeführt wird.

Auf diese Weise kann die Federvorspannung des Kupplungsbolzens der Kupplungseinheit 12 in die Schließstellung der Kupplungseinheit 12 noch durch die Druckluftvorspannung der in dem Druckluftspeicher 48 gespeicherten Druckluft unterstützt werden. Wird nun die Zugöse der Deichsel des Nachlauffahrzeugs in die Anhängerkupplung 12 eingeführt, und wird hierdurch die den Kupplungsbolzen in dessen geöffneter Stellung haltende mechanische Sperre gelöst, so fällt der Kupplungsbolzen unter dem Einfluss der Federvorspannung und der pneumatischen Vorspannung in seine Kupplungsstellung, in welcher das Nachlauffahrzeug sicher mit dem Zugfahrzeug gekuppelt ist. Erforderlichenfalls kann diese Bewegung des Kupplungsbolzens noch durch "ruckelnde" Bewegungen des Zugfahrzeugs oder/und des Nachlauffahrzeugs unterstützt werden.

Nachzutragen ist noch, dass der Druckspeicher 48 mit einer Druckanzeige 62 ausgestattet sein kann, damit die Bedienungsperson vor dem Ankuppeln kontrollieren kann, ob noch genügend Druck in dem Druckspeicher 48 vorhanden ist. Gegebenenfalls muss vom Zugfahrzeug aus, wie vorstehend beschrieben, Druckluft "nachgeladen" werden.

In Fig. 5 ist eine abgewandelte Ausführungsform einer erfindungsgemäßen Kupplungsvorrichtung 10' dargestellt, welche im Wesentlichen der Ausführungsform gemäß Fig. 1 entspricht. Daher wird die Kupplungsvorrichtung 10' gemäß Fig. 5 im Folgenden nur insoweit beschrieben werden, als sie sich von der Ausführungsform gemäß Fig. 1 unterscheidet, auf deren Beschreibung einschließlich der ergänzenden Erläuterung durch die Fig. 2 bis 4 hiermit ansonsten ausdrücklich verwiesen sei.

Bei der Kupplungsvorrichtung 10' gemäß Fig. 5 werden die Sperrventile 28a' und 28b' der Sperrventilanordnung 28' nicht automatisch dann betätigt, wenn das Anschlusselement 34' des Nachlauffahrzeugs mit dem Gegenanschlusselement 36' des Zugfahrzeugs 11' zusammengeführt wird. Vielmehr bleiben die beiden Steuerleitungen 32' oder, wie in Fig. 5 dargestellt, zumindest eine dieser Steuerleitungen 32' so lange geöffnet, bis die Bedienungsperson zusätzlich auch den Taster 70' gedrückt hat. Wird in Folge des Drückens des Tasters 70' die Sperrventilanordnung 28' in ihre Durchlassstellung übergeführt, so wird die von der Pumpe 22' über den Druckluft-Vorratsbehälter 20' und die Zufuhrleitung 26' dem Druckluft-Ausgang 30' zugeführte Druckluft über eine Zweigleitung 72' auch an einen druckluft-betätigten Schalter 74' weitergeleitet, der in einer den Taster 70' überbrückenden Steuermedium-Bypassleitung 76' angeordnet ist.

In Folge der Druckluftzufuhr wird der Schalter 74' geschlossen und in diesem Zustand gehalten, solange der Luftdruck über die Zweigleitung 72' an ihm ansteht. Daher kann die Bedienungsperson den Taster 70' nach Überführung der Sperrventilanordnung 28' in deren Durchlassstellung wieder loslassen. Die Sperrventilanordnung 28' wird erst dann wieder in ihre Sperrstellung zurückgeführt, wenn entweder das Anschlusselement 34' vom Gegenanschlusselement 36' des Zugfahrzeugs 11' abgezogen wird oder der Luftdruck in der Zweigleitung 72' unter einen vorbestimmten Wert abgefallen ist.

Selbstverständlich kann zusätzlich in einer der Leitungen, beispielsweise der Bypassleitung 76', auch ein Zeitschalter entsprechend dem Zeitschalter 44 der Ausführungsform gemäß Fig. 1 vorgesehen sein.

Durch die Ausführungsform gemäß Fig. 5 wird ein unbeabsichtigtes Lösen der Anhängerkupplung durch das Erfordernis eines kontrollierten und bewussten Handelns der Bedienungsperson ausgeschlossen.

## Patentansprüche

1. Kupplungsvorrichtung (10) an einem Zugfahrzeug (11), umfassend:
- eine Kupplungseinheit (12) zum mechanischen Verbinden eines Nachlauffahrzeugs mit dem Zugfahrzeug (11), wobei die Kupplungseinheit (12) ein Kraftgerät (14) umfasst, mittels dessen sie aus einer geschlossenen Stellung in eine geöffnete Stellung überführbar ist,
- eine Druckfluid-Zufuhrleitung (26/16), deren eines Ende an das Kraftgerät (14) angeschlossen ist, um diesem zur Betätigung der Kupplungseinheit (12) Druckfluid von einer am Zugfahrzeug (11) angeordneten Druckfluidquelle (20) zuzuführen,
wobei das andere Ende der Druckfluid-Zufuhrleitung (26/16) ständig an die Druckfluidquelle (20) angeschlossen ist und
die Druckfluid-Zufuhrteitung (26/16) wenigstens ein Sperrventil (28a, 28b) aufweist, **dadurch gekennzeichnet, daß** das Sperrventil (28a, 28b) unter dem Einfluss eines Steuermediums zwischen einer Durchlassstellung und einer Sperrstellung verstellbar ist,
wobei ein Ende einer Steuermedium-Zufuhrleitung (32) an das wenigstens eine Sperrventil (28a, 28b) angeschlossen ist, während an dem freien Ende dieser Steuermedium-Zufuhrleitung (32) ein Verbindungselement (34) vorgesehen ist, mittels dessen die Steuermedium-Zufuhrleitung (32) mit einer Steuermedium-Versorgungsstelle (36) des Zugfahrzeugs (11) verbindbar ist.

2. Kupplungsvorrichtung nach Anspruch 1,
**dadurch gekennzeichnet, dass** in der Druckfluid-Zufuhrleitung (26/16) wenigstens zwei in Reihe angeordnete Sperrventile (28a, 28b) vorgesehen sind, welche vorzugsweise mit der gleichen Steuermedium-Zufuhrleitung (32) verbunden sind.

3. Kupplungsvorrichtung nach Anspruch 1 oder 2,
**dadurch gekennzeichnet, dass** der Steuermedium-Zufuhrleitung (32) eine Zeitglied-Vorrichtung (44) zugeordnet ist, welche die Zufuhr von Steuermedium zu dem Sperrventil (28a, 28b) unterbricht, sobald seit der Herstellung der Verbindung des Verbindungselements (34) mit der Steuermedium-Versorgungsstelle (36) eine vorbestimmte Zeit vergangen ist.

4. Kupplungsvorrichtung nach einem der Ansprüche 1 bis 3,
**dadurch gekennzeichnet, dass** die Kupplungseinheit (12) in ihre geschlossene Stellung federvorgespannt ist.

5. Kupplungsvorrichtung nach einem der Ansprüche 1 bis 4,
**dadurch gekennzeichnet, dass** das Kraftgerät (14) dazu ausgelegt ist, die Kupplungseinheit (12) aus ihrer geöffneten Stellung in ihre geschlossene Stellung zu verstellen.

6. Kupplungsvorrichtung nach Anspruch 5,
**dadurch gekennzeichnet, dass** dem Kraftgerät (14) ein Druckfluidspeicher (48) zugeordnet ist, dem bei der Betätigung der Kupplungseinheit (12) im Sinne deren Überführung in die geöffnete Stellung über eine Ladevorrichtung (50) Druckfluid zugeführt wird, wobei die Ladevorrichtung (50) das im Druckfluidspeicher (48) gespeicherte Druckfluid bei einer Betätigung der Kupplungseinheit (12) im Sinne deren Überführung in die geschlossene Stellung freigibt und dem Kraftgerät (14) zuführt.

7. Kupplungsvorrichtung nach Anspruch 6,
**dadurch gekennzeichnet, dass** die Ladevorrichtung (50) umfasst:
- eine von der Druckfluid-Zufuhrleitung (26/16) abgezweigte Ladeleitung (52), welche über ein Rückschlagventil (54) zu dem Druckfluidspeicher (48) führt,
- eine von dem Druckfluidspeicher (48) zu dem Kraftgerät (14) führende Druckfluid-Abgabeleitung (60) und
- ein in der Druckfluid-Abgabeleitung (60) angeordnetes Schaltventil (56), welches in einer ersten Schaltstellung den Druckfluidspeicher (48) mit dem Kraftgerät (14) im Sinne einer Überführung der Kupplungseinheit (12) in deren geschlossene Stellung verbindet und welches in einer zweiten Stellung diese Verbindung unterbricht.

8. Kupplungsvorrichtung nach Anspruch 7,
**dadurch gekennzeichnet, dass** eine Steuerleitung (58) von der Druckfluid-Zufuhrleitung (26/16) zu dem Schaltventil (56) führt und dass über diese Steuerleitung (58) an dem Schaltventil (56) anstehendes Druckfluid dieses in seine zweite Schaltstellung überführt.

9. Kupplungsvorrichtung nach Anspruch 7 oder 8,
**dadurch gekennzeichnet, dass** das Schaltventil (56) in seine erste Schaltstellung federvorgespannt ist.

10. Kupplungsvorrichtung nach einem der Ansprüche 6 bis 9,
**dadurch gekennzeichnet, dass** der Druckfluidspeicher (48) mit einer Druckanzeigevorrichtung (62) versehen ist.

11. Kupplungsvorrichtung nach einem der Ansprüche 1 bis 10,
**dadurch gekennzeichnet, dass** das Sperrventil (28a, 28b) bei Steuermedium-Zufuhr in die Durchlassstellung überführbar ist.

12. Kupplungsvorrichtung nach einem der Ansprüche 1 bis 11,
**dadurch gekennzeichnet, dass** das Sperrventil (28a, 28b) in die Sperrstellung vorgespannt, vorzugsweise federvorgespannt, ist.

13. Kupplungsvorrichtung nach einem der Ansprüche 1 bis 12,
**dadurch gekennzeichnet, dass** das Steuermedium elektrischer Strom ist.

14. Kupplungsvorrichtung nach einem der Ansprüche 1 bis 13,
**dadurch gekennzeichnet, dass** das wenigstens eine Sperrventil (28a, 28b) ein elektromagentisch betätigbares Ventil, beispielsweise ein elektromagentisch betätigbares Wegeventil, ist.

15. Kupplungsvorrichtung nach einem der Ansprüche 1 bis 14,
**dadurch gekennzeichnet, dass** die Druckfluid-Zufuhrleitung (26/16) direkt an die Druckfluidquelle (20) angeschlossen ist.

16. Kupplungsvorrichtung nach einem der Ansprüche 1 bis 14,
**dadurch gekennzeichnet, dass** die Druckfluid-Zufuhrleitung (26/16) an einem Nebenverbraucheranschluss (24) eines von der Druckfluidquelle (20) versorgten Druckfluid-Verteilersystems des Zugfahrzeugs (11) angeschlossen ist, vorzugsweise dem Nebenverbraucheranschluss (24) eines Vierkreis-Schutzventils eines Druckluftsystems des Zugfahrzeugs (11) .

17. Kupplungsvorrichtung nach einem der Ansprüche 1 bis 16,
**dadurch gekennzeichnet, dass** an dem Zugfahrzeug (11) eine Parkposition (40) für das Verbindungselement (34) der Steuermedium-Zufuhrleitung (32) vorgesehen ist.

18. Kupplungsvorrichtung nach Anspruch 17,
**dadurch gekennzeichnet, dass** eine Signaleinrichtung (46) vorgesehen ist, welche anzeigt, ob das Verbindungselement (34) mit der Steuermedium-Versorgungsstelle (36) verbunden ist, oder/und, ob das Verbindungselement (34) in der Parkposition (40) angeordnet ist.

19. Kupplungsvorrichtung nach einem der Ansprüche 1 bis 18,
**dadurch gekennzeichnet, dass** sie eine Anhängerkupplung (12) für ein deichselgeführtes Nachlauffahrzeug ist, bei welchem an dem freien Ende der Deichsel eine zur Verbindung mit der Kupplungseinheit (12) bestimmte Zugöse vorgesehen ist.

20. Kupplungsvorrichtung nach einem der Ansprüche 1 bis 18,
**dadurch gekennzeichnet, dass** sie eine Sattelkupplung für einen Sattelauflieger ist, der an seinem in Fahrtrichtung vorauslaufenden Ende einen zur Verbindung mit der Kupplungseinheit bestimmten Kupplungszapfen aufweist.

21. Kupplungsvorrichtung nach einem der Ansprüche 1 bis 20,
**dadurch gekennzeichnet, dass** das Druckfluid ein Druckgas, vorzugsweise Druckluft, ist.

22. Kupplungsvorrichtung nach einem der Ansprüche 1 bis 21,
**dadurch gekennzeichnet, dass** der Steuermedium-Zufuhrleitung (32') ein handbetätigbarer Schalter (70') zugeordnet ist.

23. Kupplungsvorrichtung nach Anspruch 22,
**dadurch gekennzeichnet, dass** der handbetätigbare Schalter (70') mittels einer Bypass-Leitung (76') überbrückt ist, in welcher ein druckfluid-betätigbarer Schalter (74) angeordnet ist.

24. Zugfahrzeug (11) mit einer Kupplungsvorrichtung (12) nach einem der vorhergehenden Ansprüche.

## Claims

1. Coupling device (10) at a towing vehicle (11), comprising:
- a coupling unit (12) for mechanically connecting a trailer vehicle to the towing vehicle (11), wherein the coupling unit (12) comprises a power appliance (14) by means of which it can be transferred from a closed position to an open position,
- a pressure fluid feed line (26/16), one end of which is connected to the power appliance (14) in order to feed pressure fluid from a pressure fluid source (20) disposed at the towing vehicle (11) to the power appliance for operating the coupling unit (12),
wherein the other end of the pressure fluid feed line (26/16) is constantly connected to the pressure fluid source (20), and the pressure fluid feed line (26/16) has at least one check valve (28a, 28b),
**characterised in that** the check valve (28a, 28b) can be moved under the influences of a control medium between a flow position and a blocking position,
wherein one end of a control medium feed line (32) is connected to the at least one check valve (28a, 28b), while a connecting element (34) is provided at the free end of this control medium feed line (32), by means of which element the control medium feed line (32) can be connected to a control medium supply point (36) of the towing vehicle (11).

2. Coupling device according to Claim 1,
**characterised in that** at least two series-connected check valves (28a, 28b) are provided in the pressure fluid feed line (26/16), which valves are preferably connected to the same control medium feed line (32).

3. Coupling device according to Claim 1 or 2,
**characterised in that** a timer device (44) is associated with the control medium feed line (32), which device interrupts the feed of control medium to the check valve (28a, 28b) as soon as a predetermined time has passed since the connection between the connecting element (34) and the control medium supply point (36) was established.

4. Coupling device according to any one of Claims 1 to 3,
**characterised in that** the coupling unit (12) is spring-biased into its closed position.

5. Coupling device according to any one of Claims 1 to 4,
**characterised in that** the power appliance (14) is designed to move the coupling unit (12) from its open position into its closed position.

6. Coupling device according to Claim 5,
**characterised in that** a pressure fluid store (48) is associated with the power appliance (14) and fed with pressure fluid via a charging device (50) when the coupling unit (12) is operated in the sense of being transferred to the open position, wherein the charging device (50) releases the pressure fluid which is stored in the pressure fluid store (48) when the coupling unit (12) is operated in the sense of being transferred to the closed position and feeds it to the power appliance (14).

7. Coupling device according to Claim 6,
**characterised in that** the charging device (50) comprises:
- a charging line (52) which is branched off the pressure fluid feed line (26/16) and which leads via a non-return valve (54) to the pressure fluid store (48),
- a pressure fluid delivery line (60) leading from the pressure fluid store (48) to the power appliance (14) and
- a switching valve (56) which is disposed in the pressure fluid delivery line (60) and which in a first switched position connects the pressure fluid store (48) to the power appliance (14) in the sense of transferring the coupling unit (12) to its closed position and in a second switched position interrupts this connection.

8. Coupling device according to Claim 7,
**characterised in that** a control line (58) leads from the pressure fluid feed line (26/16) to the switching valve (56), and that pressure fluid present at the switching valve (56) transfers this to its second switched position via this control line (58).

9. Coupling device according to Claim 7 or 8,
**characterised in that** the switching valve (56) is spring-biased into its first switched position.

10. Coupling device according to any one of Claims 6 to 9,
**characterised in that** the pressure fluid store (48) is provided with a pressure indicator device (62).

11. Coupling device according to any one of Claims 1 to 10,
**characterised in that** the check valve (28a, 28b) can be transferred to the flow position when control medium is fed.

12. Coupling device according to any one of Claims 1 to 11,
**characterised in that** the check valve (28a, 28b) is biased into the blocking position, preferably spring-biased.

13. Coupling device according to any one of Claims 1 to 12,
**characterised in that** the control medium is electric current.

14. Coupling device according to any one of Claims 1 to 13,
**characterised in that** the at least one check valve (28a, 28b) is an electromagnetically operable valve, for example an electromagnetically operable directional control valve.

15. Coupling device according to any one of Claims 1 to 14,
**characterised in that** the pressure fluid feed line (26/16) is directly connected to the pressure fluid source (20).

16. Coupling device according to any one of Claim 1 to 14,
**characterised in that** the pressure fluid feed line (26/16) is connected to a secondary consumer connection (24) of a pressure fluid distributor system (24), which is supplied by the pressure fluid source (20), of the towing vehicle (11), preferably to the secondary consumer connection (24) of a four-circuit protection valve of a compressed air system of the towing vehicle (11).

17. Coupling device according to any one of Claims 1 to 16,
**characterised in that** a parking position (40) for the connecting element (34) of the control medium feed line (32) is provided at the towing vehicle (11).

18. Coupling device according to Claim 17,
**characterised in that** a signal device (46) is provided which indicates whether the connecting element (34) is connected to the control medium supply point (36) and/or whether the connecting element (34) is disposed in the parking position (40).

19. Coupling device according to any one of Claims 1 to 18,
**characterised in that** it is a trailer coupling (12) for a drawbar-guided trailer vehicle, with a drawbar eye intended for connection to the coupling unit (12) being provided at the free end of the drawbar.

20. Coupling device according to any one of Claims 1 to 18,
**characterised in that** it is a fifth wheel coupling for a semitrailer which, at its end which leads in the direction of travel, has a coupling pin intended for connection to the coupling unit.

21. Coupling device according to any one of Claims 1 to 20,
**characterised in that** the pressure fluid is a compressed gas, preferably compressed air.

22. Coupling device according to any one of Claim 1 to 21,
**characterised in that** a manually operable switch (70') is associated with the control medium feed line (32').

23. Coupling device according to Claim 22,
**characterised in that** the manually operable switch (70') is bypassed by means of a bypass line (76') in which a switch (74) which can be operated by pressure fluid is disposed.

24. Towing vehicle (11) with a coupling device (12) according to any one of the preceding Claims.

## Revendications

1. Dispositif d'attelage (10) sur un véhicule tracteur (11), comprenant :
- une unité d'attelage (12) pour la liaison mécanique d'un véhicule tracté avec le véhicule tracteur (11), l'unité d'attelage (12) comportant un vérin (14) au moyen duquel elle peut être transférée d'une position fermée dans une position ouverte,
- une conduite d'amenée de fluide sous pression (26/16), dont une extrémité est raccordée au vérin (14) pour acheminer à ce dernier du fluide sous pression depuis une source de fluide sous pression (20) disposée sur le véhicule tracteur (11), pour l'actionnement de l'unité d'attelage (12),
l'autre extrémité de la conduite d'amenée de fluide sous pression (26/16) étant constamment raccordée à la source de fluide sous pression (20) et
la conduite d'amenée de fluide sous pression (26/16) comportant au moins une vanne de fermeture (28a, 28b), **caractérisé en ce que** la vanne de fermeture (28a, 28b) peut être commutée sous l'effet d'un fluide de commande entre une position de passage et une position d'obturation,
une extrémité d'une conduite d'amenée du fluide de commande (32) étant raccordée à l'au moins une vanne de fermeture (28a, 28b), tandis qu'à l'extrémité libre de cette conduite d'amenée du fluide de commande (32) est prévu un élément de raccordement (34) au moyen duquel la conduite d'amenée du fluide de commande (32) peut être reliée à l'alimentation en agent de commande (36) du véhicule tracteur (11).

2. Dispositif d'attelage selon la revendication 1, **caractérisé en ce que**, dans la conduite d'amenée de fluide sous pression (26/16), il est prévu au moins deux vannes de fermeture (28a, 28b) disposées en série, lesquelles sont reliées de préférence à la même conduite d'amenée du agent de commande (32).

3. Dispositif d'attelage selon la revendication 1 ou 2, **caractérisé en ce que** d'un dispositif à temporisation (44) est affecté à la conduite d'amenée du fluide de commande (32), qui interrompt l'amenée du fluide de commande aux vannes de fermeture (28a, 28b) dès qu'un temps prédéfini s'est écoulé depuis l'établissement de la liaison de l'élément de raccordement (34) à l'alimentation en agent de commande (36).

4. Dispositif d'attelage selon l'une des revendications 1 à 3, **caractérisé en ce que** l'unité d'attelage (12) est soumise dans sa position fermée à la précontrainte d'un ressort.

5. Dispositif d'attelage selon l'une des revendications 1 à 4, **caractérisé en ce que** le vérin (14) est conçu pour faire passer l'unité d'attelage (12) de sa position ouverte dans sa position fermée.

6. Dispositif d'attelage selon la revendication 5, **caractérisé en ce qu'**un accumulateur de fluide sous pression (48) est affecté au vérin (14), auquel, lors de l'actionnement de l'unité d'attelage (12) dans le sens de son passage dans la position ouverte, du fluide sous pression est acheminé par l'intermédiaire d'un dispositif de charge (50), le dispositif de charge (50) libèrant le fluide sous pression accumulé dans l'accumulateur de fluide sous pression (48) et l'envoyant au vérin (14), lors d'un actionnement de l'unité d'attelage (12) dans le sens de son passage dans la position fermée.

7. Dispositif d'attelage selon la revendication 6, **caractérisé en ce que** le dispositif de charge (50) comporte
- une conduite de charge (52) piquée dans la conduite d'amenée de fluide sous pression (26/16), laquelle conduit par l'intermédiaire d'un clapet antiretour (54) à l'accumulateur de fluide sous pression (48),
- une conduite d'alimentation en fluide sous pression (60) menant de l'accumulateur de fluide sous pression (48) au vérin (14),
- une vanne de commutation (56) disposée dans la conduite d'alimentation en fluide sous pression (60), qui relie dans une première position de commutation l'accumulateur de fluide sous pression (48) au vérin (14) dans le sens d'un passage de l'unité d'attelage (12) dans sa position fermée, et qui interrompt cette liaison dans une deuxième position.

8. Dispositif d'attelage selon la revendication 7, **caractérisé en ce qu'**une conduite de commande (58) conduit de la conduite d'amenée de fluide sous pression (26/16) à la vanne de commande (56) et que par cette conduite de commande (58), le fluide sous pression disponible à la vanne de commande (56) fait passer cette dernière dans sa deuxième position de commutation.

9. Dispositif d'attelage selon la revendication 7 ou 8, **caractérisé en ce que** la vanne de commande (56) est précontrainte par un ressort dans sa première position de commutation.

10. Dispositif d'attelage selon l'une des revendications 6 à 9, **caractérisé en ce que** l'accumulateur de fluide sous pression (48) est doté d'un dispositif afficheur de pression (62).

11. Dispositif d'attelage selon l'une des revendications 1 à 10, **caractérisé en ce que**, lors de l'amenée d'agent de commande, la vanne de fermeture (28a, 28b) peut être passée dans sont état de passage.

12. Dispositif d'attelage selon l'une des revendications 1 à 11, **caractérisé en ce que** la vanne de fermeture (28a, 28b) est précontrainte dans la position d'obturation, de préférence précontrainte par un ressort.

13. Dispositif d'attelage selon l'une des revendications 1 à 12, **caractérisé en ce que** l'agent de commande est un courant électrique.

14. Dispositif d'attelage selon l'une des revendications 1 à 13, **caractérisé en ce que** l'au moins une vanne de fermeture (28a, 28b) est une vanne à actionnement électromagnétique, par exemple un distributeur à actionnement électromagnétique.

15. Dispositif d'attelage selon l'une des revendications 1 à 14, **caractérisé en ce que** la conduite d'amenée de fluide sous pression (26/16) est raccordée directement à la source de fluide sous pression (20).

16. Dispositif d'attelage selon l'une des revendications 1 à 14, **caractérisé en ce que** la conduite d'amenée de fluide sous pression (26/16) est raccordée à une prise pour récepteurs secondaires (24) d'un système de distribution de fluide sous pression du véhicule tracteur (11) alimenté par la source de fluide sous pression (20), de préférence à la prise pour récepteurs secondaires (24) d'une vanne de protection quadruple d'un système pneumatique du véhicule tracteur (11).

17. Dispositif d'attelage selon l'une des revendications 1 à 16, **caractérisé en ce qu'**une position de parking (40) est prévue sur le véhicule tracteur (11) pour l'élément de raccordement (34) de la conduite d'amenée de l'agent de commande (32).

18. Dispositif d'attelage selon la revendication 17, **caractérisé en ce qu'**un dispositif de signalisation (46) est prévu, lequel affiche si l'élément de raccordement (34) est relié à l'alimentation en agent de commande (36) ou/et si l'élément de raccordement (34) est disposé dans la position de parking (40).

19. Dispositif d'attelage selon l'une des revendications 1 à 18, **caractérisé en ce qu'**il est un attelage de remorque (12) pour un véhicule guidé par timon, sur lequel, à l'extrémité libre du timon, un anneau de traction est prévu pour la liaison avec l'unité d'attelage (12).

20. Dispositif d'attelage selon l'une des revendications 1 à 18, **caractérisé en ce qu'**il est un attelage à sellette pour un semi-remorque qui comporte à son extrémité avant dans le sens de la marche un téton d'accouplement destiné à la liaison avec l'unité d'attelage.

21. Dispositif d'attelage selon l'une des revendications 1 à 20, **caractérisé en ce que** le fluide sous pression est un gaz sous pression, de préférence de l'air comprimé.

22. Dispositif d'attelage selon l'une des revendications 1 à 21, **caractérisé en ce qu'**un commutateur actionné à la main (70') est affecté à la conduite d'amenée du agent de commande (32').

23. Dispositif d'attelage selon la revendication 22, **caractérisé en ce que** le commutateur actionné à la main (70') est ponté par une conduite de by-pass (76') dans laquelle est disposé un commutateur actionnable par le fluide sous pression (74).

24. Véhicule tracteur (11) avec un dispositif d'attelage (12) selon l'une des revendications précédentes.
